(19) **Europäisches Patentamt / European Patent Office / Office européen des brevets**

(11) **EP 4 645 646 A1**

(12) **EUROPEAN PATENT APPLICATION**
published in accordance with Art. 153(4) EPC

(43) Date of publication:
05.11.2025 Bulletin 2025/45

(51) International Patent Classification (IPC):
$H02J\ 7/02$ (2016.01)     $H01M\ 10/44$ (2006.01)
$H01M\ 10/48$ (2006.01)     $H01M\ 50/463$ (2021.01)

(21) Application number: 23911898.7

(22) Date of filing: 20.12.2023

(52) Cooperative Patent Classification (CPC):
H01M 10/44; H01M 10/48; H01M 50/463;
H02J 7/02; Y02E 60/10

(86) International application number:
PCT/JP2023/045744

(87) International publication number:
WO 2024/143118 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 26.12.2022 JP 2022208901

(71) Applicant: Panasonic Intellectual Property
Management Co., Ltd.
Kadoma-shi, Osaka 571-0057 (JP)

(72) Inventor: FUKUOKA, Takahiro
Kadoma-shi, Osaka 571-0057 (JP)

(74) Representative: Novagraaf International SA
Chemin de l'Echo 3
1213 Onex, Geneva (CH)

(54) **CHARGING CONTROL METHOD FOR NON-AQUEOUS ELECTROLYTE SECONDARY BATTERY, CHARGING CONTROL SYSTEM FOR NON-AQUEOUS ELECTROLYTE SECONDARY BATTERY, AND POWER SUPPLY DEVICE USING SAME**

(57) A disclosed charge control method is a charge control method for a nonaqueous electrolyte secondary battery. The secondary battery includes a positive electrode, a negative electrode, a separator, and a nonaqueous electrolyte. The negative electrode is a negative electrode in which a lithium metal deposits on the negative electrode during charging and the lithium metal dissolves into the nonaqueous electrolyte during discharging. The secondary battery includes a spacer for forming a space between the positive electrode and the negative electrode. The charge control method includes: a normal charging step of charging the secondary battery based on a first charging profile; a determination step of determining whether predetermined data regarding the secondary battery has reached a predetermined value; and a recovery charging step of, when it is determined that the predetermined data has reached the predetermined value, charging the secondary battery based on a second charging profile as subsequent charging. An average charge current value in the second charging profile is smaller than an average charge current value in the first charging profile.

EP 4 645 646 A1

## Description

[Technical Field]

The present disclosure relates to a charge control method for a nonaqueous electrolyte secondary battery, a charge control system for a nonaqueous electrolyte secondary battery, and a power supply apparatus including the charge control method or the charge control system.

[Background Art]

Conventionally, various proposals have been made for a method for charging and discharging a nonaqueous electrolyte secondary battery. PTL 1 (WO 2012/124211) discloses, in claim 1, a method for recovering a capacity of a lithium ion battery including: a positive electrode that contains a first active material and a second active material that has a lower electrode potential than that of the first active material; a negative electrode; an electrolytic solution; and a lithium ion replenishing electrode for releasing lithium ions, the method including: a determination step of determining a cause of degradation of the lithium ion battery by comparing charge and discharge characteristics in an initial stage of the lithium ion battery with charge and discharge characteristics in a determination stage after a predetermined period has passed from the initial stage, wherein if a charge and discharge capacity when an electrode potential corresponding to the first active material is held as a potential difference between the positive electrode and the negative electrode during charging and discharging of the lithium ion battery is equal between the initial stage and the determination stage, and a charge and discharge capacity when an electrode potential corresponding to the second active material is held as the potential difference is lower in the determination stage than in the initial stage, it is determined that the cause of degradation is a reduction of lithium ions; a calculation step of calculating an amount of the reduction of lithium ions based on a difference in the charge and discharge capacity when the electrode potential corresponding to the second active material is held as the potential difference between the determination stage and the initial stage; and a replenishment step of connecting the lithium ion replenishing electrode to the positive electrode or the negative electrode to release lithium ions corresponding to the amount of the reduction of lithium ions from the lithium ion replenishing electrode to replenish the lithium ion battery with the lithium ions.

[Citation List]

[Patent Literature]

PTL 1: WO 2012/124211

[Summary of Invention]

[Technical Problem]

A type of nonaqueous electrolyte secondary battery in which a lithium metal deposits on the negative electrode current collector during charging, and the lithium metal dissolves during discharging is known. In this type of nonaqueous electrolyte secondary battery, the characteristics deteriorate due to repetition of charging and discharging. For this reason, it is important to suppress the deterioration of the characteristics of the battery caused by charge and discharge cycles. Under the circumstances described above, it is an object of the present disclosure to provide a charge control method and a charge control system, with which it is possible to suppress a deterioration of the characteristics of a specific nonaqueous electrolyte secondary battery caused by charge and discharge cycles.

[Solution to Problem]

One aspect of the present disclosure relates to a charge control method for a nonaqueous electrolyte secondary battery. The charge control method is a charge control method for a nonaqueous electrolyte secondary battery. The nonaqueous electrolyte secondary battery includes a positive electrode, a negative electrode, a separator, and a nonaqueous electrolyte. The negative electrode is a negative electrode in which a lithium metal deposits on the negative electrode during charging and the lithium metal dissolves into the nonaqueous electrolyte during discharging. A spacer for forming a space between the positive electrode and the negative electrode is provided on at least one member selected from the group consisting of the positive electrode, the negative electrode, and the separator. The charge control method includes: a normal charging step of charging the nonaqueous electrolyte secondary battery based on a first charging profile; a determination step of determining whether predetermined data regarding the nonaqueous electrolyte secondary battery has reached a predetermined value; and a recovery charging step of, when it is determined that the predetermined data has reached the predetermined value, charging the nonaqueous electrolyte secondary battery based on a second charging profile as subsequent charging. An average charge current value in the second charging profile is smaller than an average charge current value in the first charging profile.

Another aspect of the present disclosure relates to a first power supply apparatus. The first power supply apparatus is a power supply apparatus that includes at least one nonaqueous electrolyte secondary battery. The at least one nonaqueous electrolyte secondary battery includes a positive electrode, a negative electrode, a separator, and a nonaqueous electrolyte. The negative electrode is a negative electrode in which a lithium metal deposits on the negative electrode during charging and the lithium metal dissolves into the nonaqueous electrolyte during discharging. A spacer for forming a space between the positive electrode and the negative electrode is provided on at least one member selected from the group consisting of the positive electrode, the negative electrode, and the separator. Charging of the at least one nonaqueous electrolyte secondary battery is controlled based on the charge control method according to the present disclosure.

Another aspect of the present disclosure relates to a charge control system for a nonaqueous electrolyte secondary battery. The charge control system is a charge control system for a nonaqueous electrolyte secondary battery, wherein the nonaqueous electrolyte secondary battery includes a positive electrode, a negative electrode, a separator, and a nonaqueous electrolyte, the negative electrode is a negative electrode in which a lithium metal deposits on the negative electrode during charging and the lithium metal dissolves into the nonaqueous electrolyte during discharging, and a spacer for forming a space between the positive electrode and the negative electrode is provided on at least one member selected from the group consisting of the positive electrode, the negative electrode, and the separator. The charge control system includes: a charge control unit that charges the nonaqueous electrolyte secondary battery based on predetermined data regarding the nonaqueous electrolyte secondary battery. The charge control unit executes: a normal charging step of charging the nonaqueous electrolyte secondary battery based on a first charging profile; a determination step of determining whether the predetermined data regarding the nonaqueous electrolyte secondary battery has reached a predetermined value; and a recovery charging step of, when it is determined that the predetermined data has reached the predetermined value, charging the nonaqueous electrolyte secondary battery based on a second charging profile as subsequent charging. An average charge current value in the second charging profile is smaller than an average charge current value in the first charging profile.

Another aspect of the present disclosure relates to a second power supply apparatus. The second power supply apparatus is a power supply apparatus that includes at least one nonaqueous electrolyte secondary battery and the charge control system according to the present disclosure. The at least one nonaqueous electrolyte secondary battery includes a positive electrode, a negative electrode, a separator, and a nonaqueous electrolyte. The negative electrode is a negative electrode in which a lithium metal deposits on the negative electrode during charging and the lithium metal dissolves into the nonaqueous electrolyte during discharging. A spacer for forming a space between the positive electrode and the negative electrode is provided on at least one member selected from the group consisting of the positive electrode, the negative electrode, and the separator. Charging of the at least one nonaqueous electrolyte secondary battery is controlled by the charge control system.

[Advantageous Effects of Invention]

According to the present disclosure, it is possible to suppress a deterioration of the characteristics of a specific nonaqueous electrolyte secondary battery caused by charge and discharge cycles.

Novel features of the present invention are set forth in the appended claims. However, the present invention will be well understood from the following detailed description of the present invention with reference to the drawings, in terms of both the configuration and the content together with other objects and features of the present invention.

[Brief Description of Drawings]

[FIG. 1] FIG. 1 is a diagram schematically showing an example of a configuration of a charge control system and a power supply apparatus according to Embodiment 1.
[FIG. 2] FIG. 2 is a flowchart illustrating one example of a charge control method according to Embodiment 1.
[FIG. 3] FIG. 3 is a perspective view schematically showing one example of a nonaqueous electrolyte secondary battery included in the power supply apparatus according to Embodiment 1.
[FIG. 4] FIG. 4 is a partial cross-sectional view schematically showing one example of an electrode group included in the nonaqueous electrolyte secondary battery of the power supply apparatus according to Embodiment 1.
[FIG. 5] FIG. 5 is a graph showing a portion of experimental results obtained in Example 1.
[FIG. 6] FIG. 6 is a graph showing another portion of the experimental results obtained in Example 1.

[Description of Embodiments]

Hereinafter, an embodiment of the present disclosure will be described by way of examples. However, the present disclosure is not limited to the examples described below. In the following description, specific numerical values and materials may be listed as examples. However, other numerical values and materials may also be used as long as the advantageous effects of the present disclosure can be obtained. In the specification of the present application, the expression "a range of a numerical value A to a numerical value B" encompasses that the range includes the numerical value A and the numerical value B, and can also be interpreted as "a numerical value A or more and a numerical value B or less". In the following description, when lower and upper limits of numerical values of specific physical properties, conditions, and the like are shown as examples, the lower limits and the upper limits can be combined in any way as long as the lower limits are not greater than or equal to the upper limits. In the following description, when examples of a constituent element are listed, unless otherwise stated, only one of the listed examples may be used, or two or more of the listed examples may be used in combination.

(Charge Control Method for Nonaqueous Electrolyte Secondary Battery)

A charge control method according to the present embodiment is a charge control method for a nonaqueous electrolyte secondary battery. Hereinafter, the charge control method according to the present embodiment may also be referred to as "charge control method (M)" or "control method (M)". Also, hereinafter, a nonaqueous electrolyte secondary battery whose charging and discharging are controlled based on the charge control method (M) may also be referred to as "nonaqueous electrolyte secondary battery (B)" or "secondary battery (B)". The nonaqueous electrolyte secondary battery (B) includes a positive electrode, a negative electrode, a separator, and a nonaqueous electrolyte. The negative electrode is a negative electrode in which a lithium metal deposits on the negative electrode during charging and the lithium metal dissolves into the nonaqueous electrolyte during discharging. A spacer for forming a space between the positive electrode and the negative electrode is provided on at least one member selected from the group consisting of the positive electrode, the negative electrode, and the separator.

The charge control method (M) includes: a normal charging step of charging the nonaqueous electrolyte secondary battery (B) based on a first charging profile; a determination step of determining whether predetermined data regarding the nonaqueous electrolyte secondary battery has reached a predetermined value; and a recovery charging step of, when it is determined that the predetermined data has reached the predetermined value, charging the nonaqueous electrolyte secondary battery (B) based on a second charging profile as subsequent charging. Hereinafter, the predetermined data used in the determination step may also be referred to as "data (D)". An average charge current value in the second charging profile is smaller than an average charge current value in the first charging profile.

As used herein, the term "average charge current value" refers to a value obtained by dividing a sum of products of a charge current and a time to charge the battery at the charge current by a total charging time. For example, where a current value at which charging is completed in 1 hour (h) is represented by 1C, the average charge current value of a profile in which charging is completed in 2 hours would be 1C × 1h / 2h = 0.5C. When the charging profile includes a plurality of charging steps, an average charge current value Ac is defined by Ac = 1C × 1h / T = 1/T, where a total charging time of the steps until charging is completed is represented by T. For example, when the charging profile includes a step of performing charging at 0.1C for 2 hours and a step of performing charging at 0.4C for 2 hours, the average charge current value would be 1C × 1h / (2h + 2h) = 0.25C.

The nonaqueous electrolyte secondary battery (B) includes a spacer for forming a space between the positive electrode and the negative electrode. As will be described in the Example section, the inventor of the present application found that, by charging the nonaqueous electrolyte secondary battery (B) at a low rate, the charge and discharge cycle characteristics of the nonaqueous electrolyte secondary battery (B) are improved. This behavior is different from the behavior of an ordinary nonaqueous electrolyte secondary battery. The present disclosure is based on this new finding. According to the charge control method (M), it is possible to suppress a deterioration of the characteristics of the nonaqueous electrolyte secondary battery (B) caused by charge and discharge cycles.

(Recovery Charging step)

The recovery charging step is a step of charging the nonaqueous electrolyte secondary battery (B) and also recovering the characteristics deteriorated by charge and discharge cycles.

In each of the normal charging step and the recovery charging step of the charge control method (M), usually, the secondary battery (B) is charged to a fully charged state or a near fully charged state. As used herein, the term "battery in a fully charged state" refers to the battery charged to a voltage (for example, 4.1 V) estimated that an amount corresponding to the rated capacity has been charged. The term "fully charged amount" refers to a charged electricity amount when the battery in a fully discharged state is charged to a fully charged state. The term "battery in a fully discharged state" refers to the battery discharged to a voltage (for example, 3 V) estimated that an amount corresponding to the rated capacity has been discharged. Hereinafter, the ratio of charged electricity amount relative to fully charged amount will be referred to as "charge ratio". The battery in a fully charged state has a charge ratio of 100%. The battery in a fully discharged state has a charge ratio of 0%.

For example, in each of the normal charging step and the recovery charging step, the battery may be charged to a charge ratio of 90% or more (for example, within a range of 95 to 100% or a range of 98 to 100%) or a charge ratio of 100%. The timing to stop charging may be determined based on the charging voltage or the charged electricity amount.

The second charging profile may be a profile in which constant current charging is performed at a current density of 1.0 mA/cm² or less. By setting the current density to 1.0 mA/cm² or less, a dense lithium metal is likely to be deposited. As a result, in particular, the charge and discharge characteristics of the nonaqueous electrolyte secondary battery (B) can be recovered. As used herein, the term "current density" refers to an electric current that flows per unit electrode area.

The current density during charging based on the second charging profile may be 0.01 mA/cm² or more, or 0.05 mA/cm² or more, and may be 0.05 mA/cm² or less, or 1.0 mA/cm² or less.

(Determination Step)

In the determination step, it is determined, based on the data (D) of the secondary battery (B), whether the secondary battery (B) requires recovery. If it is determined that the secondary battery (B) does not require recovery, charging is performed by the normal charging step. That is, in charging and discharging of the secondary battery (B), the normal charging step is basically repeated. Then, the determination step is performed during a period after the end of a single instance of the charging step (the normal charging step or the recovery charging step) and before the start of the subsequent charging step. If it is determined in the determination step that the data (D) has reached a predetermined value, in the subsequent charging, the recovery charging step is performed. That is, when it is determined that the data (D) has reached the predetermined value, it is determined that the secondary battery (B) requires recovery, and thus the recovery charging step is performed as the subsequent charging.

The data (D) may be data regarding charging and discharging of the secondary battery (B). For example, the data (D) may be data regarding charging of the secondary battery (B), data regarding discharging of the secondary battery (B), or data regarding charging and discharging of the secondary battery (B).

The data (D) may be a charge and discharge count of the nonaqueous electrolyte secondary battery (B) that is the number of times the nonaqueous electrolyte secondary battery (B) has been charged and discharged. In this case, the recovery charging step may be performed as the subsequent charging when the charge and discharge count from an initial state or the charge and discharge count after the recovery charging step performed previously reaches a predetermined value N. In other words, the recovery charging step may be performed every (N + 1) times the charging step (the normal charging step or the recovery charging step) is performed. The predetermined value N may be a value within a range of 49 to 99. With this configuration, the recovery charging step can be performed at a timing at which the charge and discharge characteristics of the nonaqueous electrolyte secondary battery (B) deteriorate significantly. The charge and discharge count is incremented by one each time a single instance of the charging step (the normal charging step or the recovery charging step) and discharging is performed. Instead of the charge and discharge count, a charge count may be used to make the determination. That is, the charge and discharge count may be interpreted as the charge count. A single instance of the normal charging step is counted as a single instance of charging, and a single instance of the recovery charging step is counted as a single instance of charging. Also, the term "initial state" mentioned above refers to a state before charging and discharging are repeated (the same applies hereinafter). The determination based on the initial state is performed only when the recovery charging step has never been performed before.

The data (D) may be an accumulated charged electricity amount of the nonaqueous electrolyte secondary battery (B). In this case, the recovery charging step may be performed as the subsequent charging when the accumulated charged electricity amount from the initial state or the accumulated charged electricity amount after the recovery charging step performed previously reaches a predetermined value X. The predetermined value X may be a value within a range of 50 to 100 times an initial charge capacity of the nonaqueous electrolyte secondary battery (B). With this configuration, the recovery charging step can be performed at a timing at which the charge and discharge characteristics of the nonaqueous electrolyte secondary battery (B) deteriorate significantly. The term "accumulated charged electricity amount" refers to an accumulated value of the amount of electricity charged in the battery.

The data (D) may be a discharge capacity of the nonaqueous electrolyte secondary battery (B). In this case, the recovery charging step may be performed as the subsequent charging when a reduction rate of the discharge capacity from the discharge capacity in the initial state or a reduction rate of the discharge capacity from the discharge capacity after the recovery charging step performed previously reaches a predetermined value Y. The predetermined value Y may be a value within a range of 2 to 5%. With this configuration, the recovery charging step can be performed at a timing at which the charge and discharge characteristics of the nonaqueous electrolyte secondary battery (B) deteriorate significantly. The reduction rate can be determined based on the following equation using a discharge capacity C0 in the initial state or after the recovery charging step performed previously and a discharge capacity C1 obtained after that.

$$\text{Reduction rate (\%)} = 100 \, (C0 - C1) \, / \, C0$$

(Normal Charging step)

As described above, in the normal charging step, the secondary battery (B) is charged to a fully charged state or a near fully charged state.

To more reliably perform charging, the charge control method (M) may further include, after the above-described charging step, a constant voltage charging step of charging the battery at a constant voltage. The constant voltage charging may be performed until the current reaches a predetermined value (for example, 0.02C). The constant voltage charging step may be performed at a charge voltage at which the secondary battery (B) has reached a fully charged state by the constant current charging.

The timing to end the recovery charging step and the normal charging step may be determined based on any one of charging time, charged electricity amount, battery voltage, and SOC.

The first charging profile may be a profile in which constant current charging is performed at a current density of 2.0 mA/cm$^2$ or more. With this configuration, the normal charging step can be performed in a short time.

The current density during charging based on the first charging profile may be 2.0 mA/cm$^2$ or more, or 5.0 mA/cm$^2$ or more, and may be 10.0 mA/cm$^2$ or less, or 20.0 mA/cm$^2$ or less.

The first charging profile may include a first charging step, a second charging step, and a third charging step in this order, the first charging step being a step of performing constant current charging at a first current density that is set to 1.0 mA/cm$^2$ or less, the second charging step being a step of performing constant current charging at a second current density that is greater than the first current density and set to 4.0 mA/cm$^2$ or less, and the third charging step being a step of performing constant current charging at a third current density that is greater than the second current density and set to 4.0 mA/cm$^2$ or more. With this configuration, it is possible to suppress, in particular, a deterioration of the characteristics of the battery caused by charge and discharge cycles.

The amount of electricity charged in the first charging step may be 15% or less (for example, within a range of 5 to 15%) of a total amount of electricity charged based on the first charging profile, and a total of the amount of electricity charged in the first charging step and the amount of electricity charged in the second charging step may be 50% or less (for example, 40% or less) of the total amount of electricity charged. With this configuration, it is possible to suppress a lithium metal growing into dendrites and also shorten the charging time.

(Spacer)

As described above, the nonaqueous electrolyte secondary battery (B) includes a spacer provided on at least one member selected from the group consisting of the positive electrode, the negative electrode, and the separator. A space is formed between the positive electrode and the negative electrode by the spacer. Due to the space being present, it is possible to suppress a lithium metal depositing on the negative electrode to expand the electrode group.

The spacer may be formed on the positive electrode, the negative electrode, the spacer, or any two or more thereof. The spacer is formed on one or both sides of a member (the positive electrode, the negative electrode, or the separator) depending on the member on which the spacer is to be formed, and the position of the space formed by the spacer.

The spacer may be formed using a material that contains a polymer material (a resin, a rubber, or the like). The spacer may be formed using a polymer material alone, or a composition that contains a polymer material. The composition contains a component (for example, an insulating inorganic filler) other than the polymer material. Examples of the insulating inorganic filler include aluminum oxide particles and silicon dioxide particles.

The polymer material that constitutes the spacer may be an insulating material. There is no particular limitation on the polymer material that constitutes the spacer. Examples of the polymer material that constitutes the spacer include fluorine-containing resins (polyvinylidene fluoride, polytetrafluoroethylene, and the like), rubbers (a styrenebutadiene copolymer, an acrylonitrile-butadiene copolymer, a hydride thereof, and the like), celluloses, acrylic resins, polyimides, polyamides, polyolefins, polyesters, silicone resins, and other polymer materials.

The planar shape of the spacer may be in a dotted pattern, a linear pattern, or a combination thereof. For example, the spacer may include a plurality of dot-shaped protrusion portions arranged at a regular interval. Alternatively, the spacer may include a plurality of linear protrusion portions arranged in a stripe pattern. Alternatively, the spacer may include linear protrusion portions arranged in a mesh pattern (for example, a honeycomb pattern).

The spacer may have a height h of 10 $\mu$m or more, 15 $\mu$m or more, or 30 $\mu$m or more, and 100 $\mu$m or less, or 60 $\mu$m or less. For example, the height h of the spacer may be 15 $\mu$m or more and 60 $\mu$m or less.

There is no particular limitation on the method for forming the spacer, and the spacer may be formed using a known method. According to one example of the method for forming the spacer, first, a material for forming the spacer is applied in a predetermined pattern on a predetermined member using a dispenser, screen printing, or the like. Next, the material is dried or cured. In this way, the spacer is formed.

(First Power Supply Apparatus)

A first power supply apparatus according to the present embodiment includes at least one nonaqueous electrolyte secondary battery (B). Charging of the at least one nonaqueous electrolyte secondary battery (B) is controlled based on the charge control method (M) described above. The charge control method (M) and the nonaqueous electrolyte secondary battery (B) were already described above, and thus a redundant description will be omitted. With the first power supply apparatus, it is possible to suppress a deterioration of performance caused when charging and discharging are repeated.

The first power supply apparatus is connected to a device and supplies power to the device. Also, the first power supply apparatus is connected to a power supply source for charging the nonaqueous electrolyte secondary battery (B), and charges the nonaqueous electrolyte secondary battery (B) with the supplied power.

(Charge Control System)

A charge control system according to the present embodiment is a charge control system for a nonaqueous electrolyte secondary battery. Hereinafter, the charge control system according to the present embodiment may also be referred to as "charge control system (S)" or "control system (S)".

The charge control method (M) described above is performed by the charge control system (S). The matters described in the description of the charge control method (M) can be applied to the charge control system (S), and thus a redundant description may be omitted. The matters described in the description of the charge control system (S) may be applied to the charge control method (M). A nonaqueous electrolyte secondary battery whose charging is controlled by the charge control system (S) is the same as the nonaqueous electrolyte secondary battery (B) described above, and thus a redundant description may be omitted. The predetermined data (the data (D)) used to make a determination in the determination step was already described above, and thus a redundant description may be omitted.

As described above, the nonaqueous electrolyte secondary battery (B) includes a positive electrode, a negative electrode, a separator, and a nonaqueous electrolyte. The negative electrode is a negative electrode in which a lithium metal deposits on the negative electrode during charging and the lithium metal dissolves into nonaqueous electrolyte during discharging. A spacer for forming a space between the positive electrode and the negative electrode is provided on at least one member selected from the group consisting of the positive electrode, the negative electrode, and the separator.

The charge control system includes a charge control unit that charges the nonaqueous electrolyte secondary battery (B) based on the predetermined data (the data (D)) regarding the nonaqueous electrolyte secondary battery (B). The charge control unit executes: a normal charging step of charging the nonaqueous electrolyte secondary battery (B) based on a first charging profile; a determination step of determining whether the data (D) regarding the nonaqueous electrolyte secondary battery (B) has reached a predetermined value; and a recovery charging step of, when it is determined that the predetermined data has reached the predetermined value, charging the nonaqueous electrolyte secondary battery (B) based on a second charging profile as the subsequent charging. The average charge current value in the second charging profile is smaller than the average charge current value in the first charging profile.

As described in the description of the charge control method (M), with the charge control system (S), it is possible to suppress a deterioration of the characteristics of the nonaqueous electrolyte secondary battery (B) caused by charge and discharge cycles.

The charge control system (S) may include a measurement unit for measuring the data (D), where appropriate. The measurement unit outputs the measured data (D) to the charge control unit. Examples of the measurement unit include a voltage meter, a current meter, and the like. The charge control unit performs a recording step of recording the data (D), where appropriate.

The charge control unit (the charge control system (S)) is connected to an external power supply. The charge control unit converts the voltage and/or the current of power supplied from the external power supply to a predetermined voltage and/or a predetermined current suitable for charging the nonaqueous electrolyte secondary battery (B), and charges the nonaqueous electrolyte secondary battery (B).

One example of the charge control unit includes an arithmetic processing device. The arithmetic processing device stores a program for executing the above-described steps. The arithmetic processing device executes the above-described steps based on the stored program. As the arithmetic processing device, a commonly used arithmetic processing device can be used.

As described above, the first charging profile and the second charging profile may be the above-described profiles. For example, the second charging profile may be a profile in which constant current charging is performed at a current density of 1.0 mA/cm$^2$ or less.

The first charging profile may be a profile in which constant current charging is performed at a current density of 2.0 mA/cm$^2$ or more.

The first charging profile may include a first charging step, a second charging step, and a third charging step in this order, the first charging step being a step of performing constant current charging at a first current density that is set to 1.0 mA/cm$^2$ or less, the second charging step being a step of performing constant current charging at a second current density that is greater than the first current density and set to 4.0 mA/cm$^2$ or less, and the third charging step being a step of performing constant current charging at a third current density that is greater than the second current density and set to 4.0 mA/cm$^2$ or more.

(Second Power Supply Apparatus)

A second power supply apparatus according to the present embodiment includes at least one nonaqueous electrolyte secondary battery (B) and the charge control system (S) described above. Charging of the at least one nonaqueous electrolyte secondary battery (B) is controlled by the charge control system (S). The charge control system (S) and the nonaqueous electrolyte secondary battery (B) were described above, and thus a redundant description will be omitted. With the second power supply apparatus, it is possible to suppress a deterioration of performance caused when charging and discharging are repeated.

The second power supply apparatus is connected to a device and supplies power to the device. Also, the charge control unit of the charge control system (S) is connected to a power supply source for charging the nonaqueous electrolyte secondary battery (B), and charges the nonaqueous electrolyte secondary battery (B) with the supplied power.

An example of a configuration of the nonaqueous electrolyte secondary battery (B) will be described below. However, the configuration of the nonaqueous electrolyte secondary battery (B) is not limited to the example shown below.

[Negative Electrode]

A lithium metal deposits on the negative electrode surface due to charging. More specifically, due to charging, lithium ions contained in the nonaqueous electrolyte receive electrons on the negative electrode and turn into a lithium metal, and the lithium metal deposits on the surface of the negative electrode. The lithium metal deposited on the surface of the negative electrode dissolves into the nonaqueous electrolyte as lithium ions due to discharging. The lithium ions contained in the nonaqueous electrolyte may be lithium ions derived from a lithium salt added to the nonaqueous electrolyte, lithium ions supplied from a positive electrode active material due to charging, or both of them.

The negative electrode may include a negative electrode current collector and a lithium metal layer provided on the negative electrode current collector. The negative electrode may be formed by attaching a negative electrode current collector and a lithium metal foil together. The negative electrode may further include a lithium ion absorbing layer (which is a layer that exhibits the capacity due to a negative electrode active material (graphite or the like) absorbing and desorbing lithium ions) supported on the negative electrode current collector. In this case, the open circuit potential of the negative electrode in a fully charged state may be 70 mV or less relative to the lithium metal (the dissolution/deposition potential of lithium). When the open circuit potential of the negative electrode in a fully charged state is 70 mV or less relative to the lithium metal, the lithium metal is present on the surface of the lithium ion absorbing layer in the fully charged state. That is, the negative electrode exhibits the capacity due to deposition and dissolution of the lithium metal.

As used herein, the term "fully charged state" refers to a state in which a battery is charged to a state of charge of, for example, 0.98C or more, where the rated capacity of the battery is represented by C (SOC = 98% or more). The open circuit potential of the negative electrode in a fully charged state can be measured by disassembling the battery in a fully charged state under an argon atmosphere to take out the negative electrode from the battery, and assembling a cell using a lithium metal as a counter electrode. The nonaqueous electrolyte used in the cell may have the same composition as the nonaqueous electrolyte of the disassembled battery.

The lithium ion absorbing layer can be obtained by forming a negative electrode material mixture that contains the negative electrode active material into a layer. The negative electrode material mixture may contain, in addition to the negative electrode active material, a binder, a thickener, a conductive material, and the like.

Examples of the negative electrode active material include a carbonaceous material, a Si-containing material, a Sn-containing material, and the like. The negative electrode may contain one negative electrode active material, or may contain a combination of two or more negative electrode active materials. Examples of the carbonaceous material include graphite, graphitizable carbon (soft carbon), and non-graphitizable carbon (hard carbon).

The conductive material is, for example, a carbon material. Examples of the carbon material include carbon blacks (acetylene black and ketjen black), carbon nanotubes, graphites, and the like.

As the binder, for example, a fluorine resin, polyacrylonitrile, a polyimide resin, an acrylic resin, a polyolefin resin, a rubbery polymer, or the like is used. As the fluorine resin, polytetrafluoroethylene, polyvinylidene fluoride, or the like is used.

The negative electrode current collector may be a conductive sheet. As the conductive sheet, a foil, a film, or the like is used. There is no particular limitation on the thickness of the negative electrode current collector. The thickness of the negative electrode current collector is, for example, 5 μm or more and 300 μm or less.

The material for forming the negative electrode current collector (conductive sheet) may be a conductive material other than a lithium metal and a lithium alloy. The conductive material may be a metal or a metal material such as an alloy. The conductive material is preferably a material unreactive to lithium. More specifically, the conductive material is preferably a material that does not form an alloy nor an intermetallic compound with lithium. Examples of the conductive material include copper (Cu), nickel (Ni), iron (Fe), an alloy that contains any of these metal elements, and a graphite whose basal plane is preferentially exposed. Examples of the alloy include a copper alloy, stainless steel (SUS), and the like. In particular, it is preferable to use copper, which is highly conductive, and/or a copper alloy. The negative electrode current collector may be a copper foil or a copper alloy foil.

[Positive Electrode]

The positive electrode includes, for example, a positive electrode current collector and a positive electrode material mixture layer supported on the positive electrode current collector. The positive electrode material mixture layer contains, for example, a positive electrode active material, a conductive material, and a binder. The positive electrode material mixture layer may be formed only on one side of the positive electrode current collector or both sides of the positive electrode current collector. The positive electrode can be obtained by applying, for example, to both sides of the positive electrode current collector, a positive electrode material mixture slurry containing the positive electrode active material, the conductive material, and the binder, drying the coating film, and then rolling the whole.

The positive electrode active material is a material that absorbs and desorbs lithium ions. As the positive electrode active material, for example, a composite oxide that contains lithium and a metal Me (a metal other than lithium) (for example, a lithium-containing transition metal oxide that contains at least a transition metal as the metal Me), a transition metal fluoride, a polyanion, a fluorinated polyanion, a transition metal sulfide, or the like may be used. In particular, in terms of low production cost and a high average discharge voltage, it is preferable to use a lithium-containing transition metal oxide. In particular, it is preferable to use a lithium-containing transition metal oxide that has a layered rock salt crystal structure.

The lithium contained in the lithium-containing transition metal oxide is released from the positive electrode as lithium ions during charging, and deposits on the negative electrode or the negative electrode current collector as a lithium metal. During discharging, the lithium metal dissolves from the negative electrode to release lithium ions, and the lithium ions are absorbed by the composite oxide of the positive electrode. That is, the lithium ions involved in charging and discharging are generally derived from the solute in the nonaqueous electrolyte and the positive electrode active material. In this case, a molar ratio (mLi/mMe) of a total amount (mLi) of Li contained in the positive electrode and the negative electrode relative to an amount (mMe) of the metal Me contained in the lithium-containing transition metal oxide is, for example, 1.2 or less.

Examples of a transition metal element that can be contained in the lithium-containing transition metal oxide include Sc, Ti, V, Cr, Mn, Fe, Co, Ni, Cu, Y, Zr, W, and the like. The lithium-containing transition metal oxide may contain one transition metal element, or may contain two or more transition metal elements. The transition metal element may be Co, Ni and/or Mn. The lithium-containing transition metal oxide may contain one or more representative elements, where appropriate. Examples of the representative element include Mg, Al, Ca, Zn, Ga, Ge, Sn, Sb, Pb, Bi, and the like. The representative element may be Al or the like.

Out of lithium-containing transition metal oxides, from the viewpoint of obtaining a high capacity, it is preferable to use a composite oxide that contains Co, Ni and/or Mn as transition metal elements and Al as an optional component, and has a layered rock salt crystal structure. Also, in particular, it is preferable to use a lithium-containing transition metal oxide that contains at least Ni as a transition metal because it has a high capacity. In this case, in the secondary battery (B), a molar ratio (mLi/mM) of a total amount (mLi) of lithium contained in the positive electrode and the negative electrode and an amount (mM) of a metal M contained in the positive electrode other than lithium may be set to, for example, 1.1 or less.

The lithium-containing transition metal oxide is represented by, for example, a general formula (1): $Li_aNi_bM_{1-b}O_2$. The general formula (1) satisfies, for example, $0.9 \leq a \leq 1.2$ and $0.65 \leq b \leq 1$. M may represent, for example, at least one element selected from the group consisting of Co, Mn, Al, Ti, Fe, Nb, B, Mg, Ca, Sr, Zr, and W.

As the binder, the conductive material, and the like, for example, those listed as examples of the binder, the conductive material, and the like in the description of the negative electrode can be used. The shape and the thickness of the positive electrode current collector can be selected from those listed as examples of the shape and the thickness range of the positive electrode current collector.

The material for forming the positive electrode current collector (conductive sheet) may be, for example, a metal material that contains Al, Ti, Fe, or the like. The metal material may be Al, an Al alloy, Ti, a Ti alloy, an Fe alloy, or the like. The Fe alloy may be stainless steel (SUS).

[Separator]

As the separator, an ion-permeable and insulating porous sheet is used. As the porous sheet, for example, a microporous thin film, a microporous woven fabric, a microporous non-woven fabric, or the like may be used. There is no particular limitation on the material for forming the separator, but a polymer material may be used. As the polymer material, an olefin resin, a polyamide resin, a cellulose, or the like may be used. Examples of the olefin resin include polyethylene, polypropylene, a copolymer of ethylene and propylene, and the like. The separator may contain an additive, where appropriate. As the additive, an inorganic filler or the like may be used.

There is no particular limitation on the thickness of the separator, but the thickness of the separator is, for example, 5 μm or more and 20 μm or less, and more preferably 10 μm or more and 20 μm or less.

[Nonaqueous Electrolyte]

A lithium ion-conductive nonaqueous electrolyte contains, for example, a nonaqueous solvent, and a lithium ion and an anion that are dissolved in the nonaqueous solvent. The nonaqueous electrolyte may be in the form of a liquid or a gel.

The nonaqueous electrolyte in the form of a liquid is prepared by dissolving a lithium salt in the nonaqueous solvent. By the lithium salt dissolving into the nonaqueous solvent, the lithium ion and the anion are generated.

The nonaqueous electrolyte in the form of a gel contains a lithium salt and a matrix polymer, or contains a lithium salt, a nonaqueous solvent, and a matrix polymer. As the matrix polymer, for example, a polymer material that absorbs the nonaqueous solvent and turns into a gel is used. As the polymer material, a fluorine resin, an acrylic resin, a polyether resin, or the like may be used.

As the anion, a known anion used in the nonaqueous electrolyte of a nonaqueous electrolyte secondary battery can be used. Specific examples include $BF_4^-$, $ClO_4^-$, $PF_6^-$, $CF_3SO_3^-$, $CF_3CO_2^-$, an imide anion, an oxalate complex anion, and the like. Examples of the imide anion include $N(SO_2CF_3)_2^-$, $N(C_mF_{2m+1}SO_2)_x(C_nF_{2n+1}SO_2)_y^-$, and the like, where m and n each independently represent an integer of 0, or 1 or more, and x and y each independently represent 0, 1, or 2 and satisfy x + y = 2. The oxalate complex anion may contain boron and/or phosphorus. Examples of the oxalate complex anion include a bis(oxalate)borate anion, a difluoro(oxalato)borate anion $(BF_2(C_2O_4)^-)$, $PF_4(C_2O_4)^-$, $PF_2(C_2O_4)_2^-$, and the like. The nonaqueous electrolyte may contain one of these anions, or two or more of these anions.

From the viewpoint of suppressing a lithium metal depositing in the form of dendrites, the nonaqueous electrolyte preferably contains at least an oxalate complex anion. In particular, it is desirable that the nonaqueous electrolyte contains a fluorine-containing oxalate complex anion (in particular, a difluoro(oxalato)borate anion). By an interaction between the fluorine-containing oxalate complex anion and lithium, a lithium metal in the form of fine particles is likely to deposit uniformly. For this reason, local deposition of the lithium metal is likely to be suppressed. The fluorine-containing oxalate complex anion may be combined with a different anion. The different anion may be $PF_6^-$ and/or an imide anion.

As the nonaqueous solvent, for example, an ester, an ether, a nitril, an amide, or a halogenated form thereof may be used. The nonaqueous electrolyte may contain one of these nonaqueous solvents, or two or more of these nonaqueous solvents. The halogenated form may be a fluoride or the like.

The lithium salt concentration in the nonaqueous electrolyte is, for example, 0.5 mol/L or more and 3.5 mol/L or less. The anion concentration in the nonaqueous electrolyte may be 0.5 mol/L or more and 3.5 mol/L or less. Also, the oxalate complex anion concentration in the nonaqueous electrolyte may be 0.05 mol/L or more and 1 mol/L or less.

One example of the structure of the secondary battery (B) is a structure in which a spirally-wound type electrode group and an electrolyte solution are housed in an outer casing. The spirally-wound type electrode group is formed by spirally winding the positive electrode and the negative electrode with the separator interposed therebetween. The electrode group of the secondary battery (B) may be a different type of electrode group other than the spirally-wound type electrode group. For example, the electrode group may be a stacked type electrode group in which the positive electrode and the negative electrode are stacked with the separator interposed therebetween. There is no particular limitation on the shape of the secondary battery (B), and the shape of the secondary battery (B) may be a cylindrical shape, a prismatic shape, a coin shape, a button shape, a laminate shape, or the like.

Hereinafter, examples of the charge control method (M), the charge control system (S), and the first and second power supply apparatuses will be described specifically with reference to the drawings. The description given above may be applied to the examples described below. Also, the examples described below can be changed based on the description given above. Also, the matters described below may be applied to the embodiment described above. Also, in the examples described below, the matters that are not essential to the embodiment of the present disclosure may be omitted.

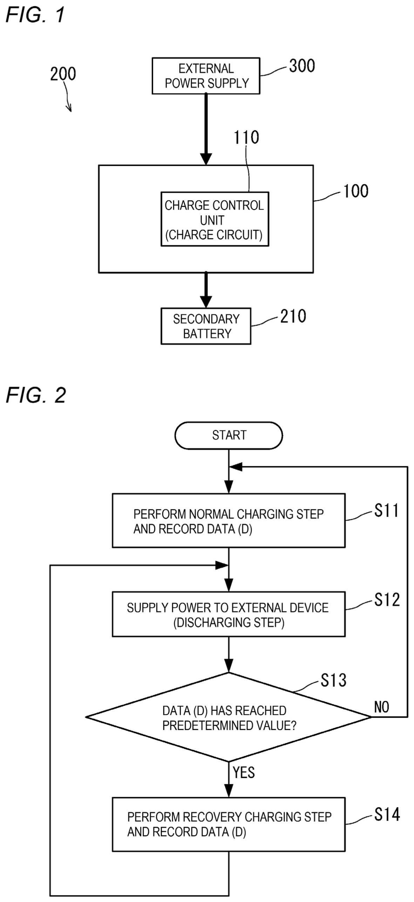

FIG. 1 schematically shows an example of a configuration of a charge control system (S) and a power supply apparatus that includes the charge control system (S). In a charge control system 100 and a power supply apparatus 200 shown in FIG. 1, the charge control method (M) is performed. For this reason, the power supply apparatus 200 can be regarded as an example of the first power supply apparatus, and also as an example of the second power supply apparatus.

The power supply apparatus 200 includes the charge control system 100 and a secondary battery (nonaqueous electrolyte secondary battery (B)) 210. The charge control system 100 includes a charge control unit 110. The charge control system 100 may also include a measurement unit (measurement device), where appropriate. The charge control unit 110 is connected to an external power supply 300. The external power supply 300 supplies charging power to the charge control unit 110. The charge control unit 110 charges the secondary battery 210 with the supplied power. The charge control unit 110 records data (D) such as charge and discharge count, and controls charging based on the recorded data (D). The secondary battery 210 is connected to an external device (not shown) and supplies power to the external device. The external power supply 300 may be regarded as a portion of the power supply apparatus 200, or as a different apparatus separate from the power supply apparatus 200.

One example of the charging step executed by the charge control unit 110 is schematically shown in FIG. 2. FIG. 2 shows an example in which the data (D) is charge count. The flowchart shown in FIG. 2 is an example, and thus can be changed according to the type of data (D) or the usage of power supply. For example, a determination step S13 may be performed prior to a discharging step S12.

In the example shown in FIG. 2, first, a normal charging step is performed, and data (D) (charge count in this example) is recorded (step S11). Next, by using the charged secondary battery 210, power is supplied to the external device (step S12). Next, it is determined whether the data (D) has reached a predetermined value (step S13). If it is determined that the data (D) has not reached the predetermined value, the procedure returns to step S11, where the normal charging step and the data (D) recording are performed. If it is determined in step S13 that the data (D) has reached the predetermined value, a recovery charging step is performed as subsequent charging, and the data (D) is recorded (step S14). After step S14, the procedure returns to step S12, where power is supplied to the external device. The normal charging step and the recovery charging step are performed under the above-described conditions. In this way, the charge control method (M) is executed.

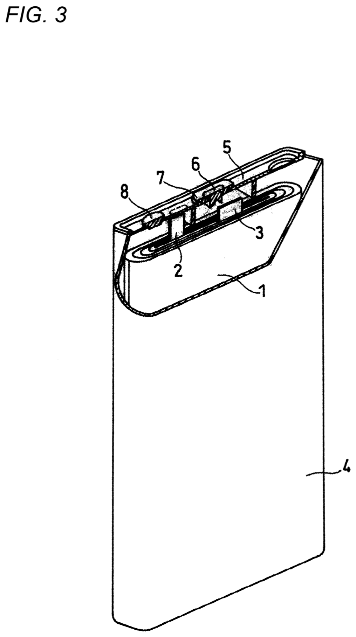

As one example of the secondary battery 210, a prismatic secondary battery (lithium secondary battery) is shown in FIG. 3. FIG. 3 is a schematic partially cutaway perspective view of the secondary battery. The secondary battery shown in FIG. 3 includes a bottomed prismatic battery case 4, and an electrode group 1 and an electrolyte solution (not shown) that are housed in the battery case 4. The electrode group 1 includes a long strip-shaped negative electrode, a long strip-shaped positive electrode, and a separator interposed between the negative electrode and the positive electrode. A negative electrode current collector included in the negative electrode is electrically connected to a negative electrode terminal 6 provided in a sealing plate 5 via a negative electrode lead 3. The negative electrode terminal 6 is insulated from the sealing plate 5 by a resin gasket 7. A positive electrode current collector included in the positive electrode is electrically connected to an underside of the sealing plate 5 via a positive electrode lead 2. That is, the positive electrode is electrically connected to the battery case 4 that also functions as a positive electrode terminal. The periphery of the sealing plate 5 is fitted to an opening end of the battery case 4, and the fitted portion is laser-welded. The sealing plate 5 includes an injection hole for injecting the electrolyte solution (nonaqueous electrolyte), and the injection hole is closed by a closure 8 after the electrolyte solution has been injected.

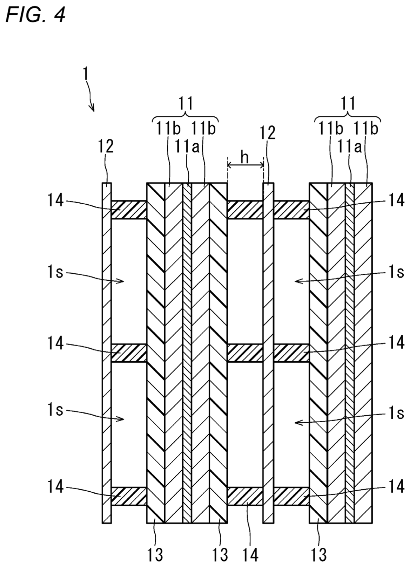

As described above, the secondary battery 210 includes a spacer. FIG. 4 schematically shows a partial cross-sectional view of one example of the electrode group 1 in which a spacer is formed on the separator.

The electrode group 1 shown in FIG. 4 includes a positive electrode 11, a negative electrode 12, a separator 13, and a spacer 14. The spacer 14 is formed on one side of the separator 13. The positive electrode 11 includes a positive electrode current collector 11a and positive electrode material mixture layers 11b formed on both sides of the positive electrode current collector 11a. The negative electrode 12 is the above-described negative electrode. In FIG. 4, the height of the spacer 14 is indicated by h.

The spacer 14 includes, for example, protrusion portions that extend linearly. Due to the presence of the spacer 14, spaces 1s are formed between the positive electrode 11 and the negative electrode 12. FIG. 4 shows an example in which the spacer 14 is provided adjacent to the negative electrode 12. However, the spacer 14 may be provided adjacent to the positive electrode 11. The spacer 14 may be formed on the positive electrode 11 or the negative electrode 12.

(Additional Statement)

The following techniques are disclosed based on the forgoing description.

(Technique 1)

A charge control method for a nonaqueous electrolyte secondary battery, wherein the nonaqueous electrolyte secondary battery includes a positive electrode, a negative electrode, a separator, and a nonaqueous electrolyte, the negative electrode is a negative electrode in which a lithium metal deposits on the negative electrode during charging and the lithium metal dissolves into the nonaqueous electrolyte during discharging, and a spacer for forming a space between the positive electrode and the negative electrode is provided on at least one member selected from the group consisting of the positive electrode, the negative electrode, and the separator,

the charge control method including:

a normal charging step of charging the nonaqueous electrolyte secondary battery based on a first charging profile;

a determination step of determining whether predetermined data regarding the nonaqueous electrolyte secondary battery has reached a predetermined value; and

a recovery charging step of, when it is determined that the predetermined data has reached the predetermined value, charging the nonaqueous electrolyte secondary battery based on a second charging profile as subsequent charging,

wherein an average charge current value in the second charging profile is smaller than an average charge current value in the first charging profile.

(Technique 2)

The charge control method according to technique 1,
wherein the second charging profile is a profile in which constant current charging is performed at a current density of 1.0 mA/cm$^2$ or less.

(Technique 3)

The charge control method according to technique 1 or 2,

wherein the predetermined data is a charge and discharge count of the nonaqueous electrolyte secondary battery,
when the charge and discharge count from an initial state or the charge and discharge count from the recovery charging step performed previously reaches a predetermined value N, the recovery charging step is performed as the subsequent charging, and
the predetermined value N is a value within a range of 49 to 99.

(Technique 4)

The charge control method according to technique 1 or 2,

wherein the predetermined data is an accumulated charged electricity amount of the nonaqueous electrolyte secondary battery,
when the accumulated charged electricity amount from an initial state or the accumulated charged electricity amount after the recovery charging step performed previously reaches a predetermined value X, the recovery charging step is performed as the subsequent charging, and
the predetermined value X is a value within a range of 50 to 100 times an initial charge capacity of the nonaqueous electrolyte secondary battery.

(Technique 5)

The charge control method according to technique 1 or 2,

wherein the predetermined data is a discharge capacity of the nonaqueous electrolyte secondary battery,
when a reduction rate of the discharge capacity from the discharge capacity in an initial state or a reduction rate of the discharge capacity from the discharge capacity after the recovery charging step performed previously reaches a predetermined value Y, the recovery charging step is performed as the subsequent charging, and

the predetermined value Y is a value within a range of 2 to 5%.

(Technique 6)

The charge control method according to any one of claims 1 to 5,
wherein the first charging profile is a profile in which constant current charging is performed at a current density of 2.0 mA/cm$^2$ or more.

(Technique 7)

The charge control method according to any one of claims 1 to 5,
wherein the first charging profile includes: a first charging step, a second charging step, and a third charging step in this order, the first charging step being a step of performing constant current charging at a first current density that is set to 1.0 mA/cm$^2$ or less, the second charging step being a step of performing constant current charging at a second current density that is greater than the first current density and set to 4.0 mA/cm$^2$ or less, and the third charging step being a step of performing constant current charging at a third current density that is greater than the second current density and set to 4.0 mA/cm$^2$ or more.

(Technique 8)

The charge control method according to claim 7,

wherein an amount of electricity charged in the first charging step is 15% or less of a total amount of electricity charged based on the first charging profile, and
a total of the amount of electricity charged in the first charging step and an amount of electricity charged in the second charging step is 50% or less of the total amount of electricity charged.

(Technique 9)

A power supply apparatus including at least one nonaqueous electrolyte secondary battery,

wherein the at least one nonaqueous electrolyte secondary battery includes a positive electrode, a negative electrode, a separator, and a nonaqueous electrolyte,
the negative electrode is a negative electrode in which a lithium metal deposits on the negative electrode during charging and the lithium metal dissolves into the nonaqueous electrolyte during discharging,
a spacer for forming a space between the positive electrode and the negative electrode is provided on at least one member selected from the group consisting of the positive electrode, the negative electrode, and the separator, and

charging of the at least one nonaqueous electrolyte secondary battery is controlled based on the charge control method according to any one of claims 1 to 8.

(Technique 10)

A charge control system for a nonaqueous electrolyte secondary battery, wherein the nonaqueous electrolyte secondary battery includes a positive electrode, a negative electrode, a separator, and a nonaqueous electrolyte, the negative electrode is a negative electrode in which a lithium metal deposits on the negative electrode during charging and the lithium metal dissolves into the nonaqueous electrolyte during discharging, and a spacer for forming a space between the positive electrode and the negative electrode is provided on at least one member selected from the group consisting of the positive electrode, the negative electrode, and the separator,

the charge control system including:

a charge control unit that charges the nonaqueous electrolyte secondary battery based on predetermined data regarding the nonaqueous electrolyte secondary battery,

wherein the charge control unit executes:

a normal charging step of charging the nonaqueous electrolyte secondary battery based on a first charging profile;

a determination step of determining whether the predetermined data regarding the nonaqueous electrolyte secondary battery has reached a predetermined value; and

a recovery charging step of, when it is determined that the predetermined data has reached the predetermined value, charging the nonaqueous electrolyte secondary battery based on a second charging profile as subsequent charging, and

an average charge current value in the second charging profile is smaller than an average charge current value in the first charging profile.

(Technique 11)

The charge control system according to technique 10,

wherein the second charging profile is a profile in which constant current charging is performed at a current density of 1.0 mA/cm$^2$ or less.

(Technique 12)

The charge control system according to technique 10 or 11,

wherein the first charging profile is a profile in which constant current charging is performed at a current density of 2.0 mA/cm$^2$ or more.

(Technique 13)

The charge control system according to technique 10,

wherein the first charging profile includes a first charging step, a second charging step, and a third charging step in this order, the first charging step being a step of performing constant current charging at a first current density that is set to 1.0 mA/cm$^2$ or less, the second charging step being a step of performing constant current charging at a second current density that is greater than the first current density and set to 4.0 mA/cm$^2$ or less, and the third charging step being a step of performing constant current charging at a third current density that is greater than the second current density and set to 4.0 mA/cm$^2$ or more.

(Technique 14)

A power supply apparatus including:

at least one nonaqueous electrolyte secondary battery; and

the charge control system according to any one of techniques 10 to 13,

wherein the at least one nonaqueous electrolyte secondary battery includes a positive electrode, a negative electrode, a separator, and a nonaqueous electrolyte,

the negative electrode is a negative electrode in which a lithium metal deposits on the negative electrode during charging and the lithium metal dissolves into the nonaqueous electrolyte during discharging,

a spacer for forming a space between the positive electrode and the negative electrode is provided on at least one member selected from the group consisting of the positive electrode, the negative electrode, and the separator, and

charging of the at least one nonaqueous electrolyte secondary battery is controlled by the charge control system.

[Example]

Hereinafter, the present disclosure will be described specifically based on examples. However, the present disclosure is not limited to the examples given below. In the following examples, two types of nonaqueous electrolyte secondary batteries were subjected to charge and discharge cycle characteristics evaluation.

(Production of Battery A1)

A battery A1 (nonaqueous electrolyte secondary battery (B)) was produced in the following procedure.

(1) Production of Positive Electrode

A lithium nickel composite oxide (LiNi$_{0.9}$Co$_{0.05}$Al$_{0.05}$O$_2$), acetylene black, and polyvinylidene fluoride (PVdF) were mixed at a mass ratio of 95:2.5:2.5. N-methyl-2-pyrrolidone (NMP) was added thereto, and the mixture was stirred. In this way, a positive electrode slurry was prepared. Next, the positive electrode slurry was applied to surfaces of an Al foil as a positive electrode current collector, the coating film was dried, and then the whole was rolled. In this way, a positive electrode with a positive electrode material mixture layer (density: 3.6 g/cm$^3$) formed on each surface of the Al foil was obtained.

(2) Production of Negative Electrode

An electrolytic copper foil (thickness: 10 $\mu$m) with lithium metal foils (thickness: 20 $\mu$m) attached thereto was cut into a predetermined electrode size to obtain a negative electrode.

(3) Preparation of Nonaqueous Electrolyte

A nonaqueous electrolyte was prepared by dissolving lithium salts in a mixed solvent. As the mixed solvent, a mixture of fluoroethylene carbonate (FEC), ethyl methyl carbonate (EMC), and dimethyl carbonate (DMC) mixed at a volume ratio (FEC : EMC : DMC) of 20:5:75 was used. As the lithium salts, LiPF$_6$, LiN(FSO$_2$)$_2$ (hereinafter referred to as "LiFSI"), and LiBF$_2$(C$_2$O$_4$) (hereinafter referred to as "LiFOB") were used. The LiPF$_6$ concentration in the nonaqueous electrolyte was 0.5 mol/L, and the LiFSI concentration in the nonaqueous electrolyte was 0.5 mol/L. The LiFOB content in the nonaqueous electrolyte was 1 mass%.

(4) Formation of Spacer

A spacer was formed on one side of a separator (a porous polyethylene film) in the following procedure. First, a dispersion liquid (the material for forming the spacer) was prepared by mixing insulating particles (median diameter: 3 $\mu$m), an alkyd resin (binder), a carboxymethyl cellulose sodium salt, and water as a dispersion medium. Next, the resulting dispersion liquid was applied in a stripe pattern onto one side of the separator using a dispenser, and then the applied dispersion liquid was dried. In this way, a stripe-pattern spacer was formed on one side of the separator.

(5) Assembly of Battery

A positive electrode lead made of Al was attached to the positive electrode obtained above. A negative electrode lead made of Ni was attached to the negative electrode obtained above. The positive electrode and the negative electrode were spirally wound with the separator interposed therebetween under an inert gas atmosphere. In this way, a spirally-wound type electrode group was produced. At this time, the separator was provided such that the spacer was adjacent to the positive electrode.

Next, the electrode group was housed in an outer casing. As the outer casing, a pouch-shaped outer casing formed using a laminate sheet including an Al layer was used. Next, the nonaqueous electrolyte prepared above was injected into the outer casing, and then the outer casing was sealed. In this way, a nonaqueous electrolyte secondary battery was produced. When housing the electrode group into the outer casing, a portion of the positive electrode lead and a portion of the negative electrode lead were exposed to the outside of the outer casing.

In the manner described above, the battery A1 was produced. Furthermore, a battery C1 was produced in the same manner and under the same condition as those used to produce the battery A1, except that the spacer was not formed on the separator. The battery C1 is not the nonaqueous electrolyte secondary battery (B) described above because the battery C1 does not include the spacer.

(6) Charge and discharge Cycle Test

Each of the batteries A1 and C1 produced was subjected to two types of charge and discharge cycle tests in the following procedure. Each of the charge and discharge tests was performed in an environment of 25°C.

(6-1) First Charge and discharge Cycle Test (with Recovery Charging Step)

In a first charge and discharge cycle test, each battery was charged/discharged based on the charge control method (M) described above. Specifically, first, a step including the normal charging step and the discharging step was defined as a single instance of charging and discharging, and charging and discharging was repeated. Then, when the charge and discharge count from the initial state or the charge and discharge count after the recovery charging step performed previously reached 49, the recovery charging step (low rate charging) was performed as subsequent charging. That is, the recovery charging step was performed every 50 times the charging step (the normal charging step and the recovery charging step) was performed. The steps were performed under the following conditions.

(Normal Charging Step)

Constant current charging was performed at a current of 0.4C (current density: 4 mA/cm$^2$) to a charge ratio of 100%.

(Discharging Step)

After 10 minutes from the end of the charging step, constant current discharging was performed at a current of 0.6C (current density: 6 mA/cm$^2$) to a voltage of 3 V.

(Recovery Charging step)

Constant current charging was performed at a current of 0.05C (current density: 0.5 mA/cm$^2$) to a charge ratio of 100%.

(6-2) Second Charge and discharge Cycle Test (without Recovery Charging Step)

In a second charge and discharge cycle test, a charge/discharging step including the normal charging step and the discharging step was defined as a single instance of charging and discharging, and charging and discharging was repeated. In the second charge and discharge cycle test, the recovery charging step was not performed. The normal charging step and the discharging step were performed under the same conditions as those used in the first charge and discharge cycle test.

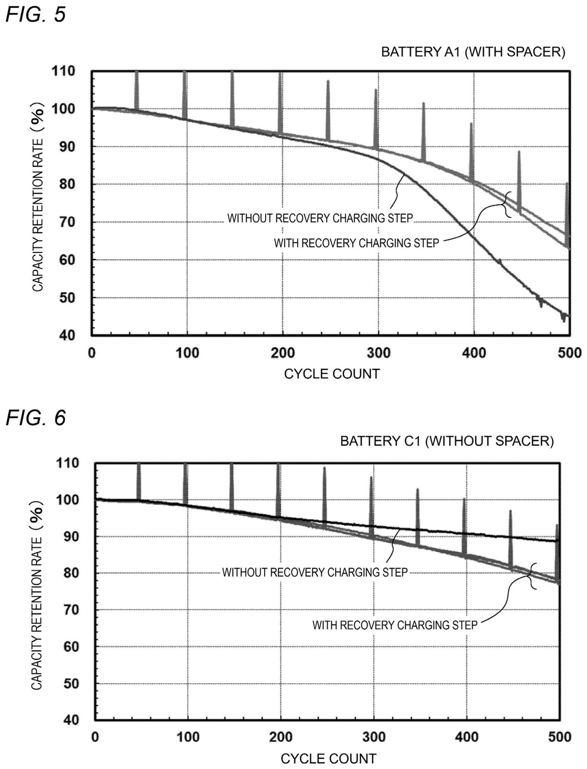

In the above-described charge and discharge cycle tests, the capacity retention rate of each battery was measured. The measurement results are shown in FIGS. 5 and 6. FIG. 5 shows results obtained when the battery A1 was subjected to the first charge and discharge cycle test (including the recovery charging step) and the second charge and discharge cycle test (without the recovery charging step). FIG. 6 shows results obtained when the battery C1 was subjected to the first charge and discharge cycle test and the second charge and discharge cycle test. A spike that appears every 50 cycles in a curve that represents the capacity retention rate indicates the amount of capacity increased due to the effect of resistance caused by charging the battery at a low current density in the recovery charging step.

As shown in FIG. 5, in the charging and discharging of the battery A1 including the spacer, when the recovery charging step was performed, the capacity retention rate increased significantly as compared with that when the recovery charging step was not performed. As shown in FIG. 6, in the charging and discharging of the battery C1 without the spacer, when the recovery charging step was performed, the capacity retention rate decreased as compared with that when the recovery charging step was not performed. As described above, the effect obtained by performing the recovery charging step was opposite between the battery A1 including the spacer and the battery C1 without the spacer.

The reason for this is currently unclear, but the following possibility may be considered. It is considered that, by performing the recovery charging step (low rate charging), a dense lithium metal deposits on the negative electrode. On the other hand, in the normal charging step, it is considered that a rough lithium metal deposits on the negative electrode. Also, in the battery without a space between the positive and negative electrodes, it is considered that a dense lithium metal deposits because pressure is applied to the lithium metal. On the other hand, in the battery with a space between the positive and negative electrodes, it is considered that a rough lithium metal deposits because pressure is unlikely to be applied to the lithium metal. In the battery C1 without a space between the positive and negative electrodes, due to the recovery charging step being performed, on the dense lithium metal between the positive and negative electrodes, a denser lithium metal deposits, which expels the nonaqueous electrolyte between the positive and negative electrodes. As a result, it may have caused a deterioration of the cycle characteristics as shown in FIG. 6.

When the recovery charging step is not performed for the battery A1 with a space between the positive and negative electrodes, a rough lithium metal deposits between the positive and negative electrodes, and thus an isolated lithium metal is likely to be generated. As a result, it may have caused a significant deterioration of the cycle characteristics. On the other hand, when the recovery charging step is performed for the battery A1, a dense lithium metal deposits between the positive and negative electrodes to reduce the amount of isolated rough lithium metal. This may have caused an improvement in the cycle characteristics. As described above, it is important to perform the recovery charging step for the battery with a space between the positive and negative electrodes.

The capacity retention rate of the battery A1 is lower than the capacity retention rate of the battery C1. However, the battery A1 has an advantage other than the capacity retention rate such as suppressing an expansion of the electrode group.

[Industrial Applicability]

The present disclosure is applicable to a charge control method for a nonaqueous electrolyte secondary battery, a charge control system for a nonaqueous electrolyte secondary battery, and a power supply apparatus that uses the charge control method or the charge control system.

The present invention has been described in terms of the presently preferred embodiments, but the disclosure should not be interpreted as limiting. Various alterations and modifications will no doubt become apparent to those skilled in the art to which the present invention pertains, after having read the disclosure. Accordingly, it is to be understood that the appended claims be interpreted as covering all alterations and modifications which fall within the true spirit and scope of the present invention.

[Reference Signs List]

1: electrode group
1s: space
11: positive electrode
12: negative electrode
13: separator
14: spacer
100: charge control system
110: charge control unit
200: power supply apparatus
210: secondary battery
300: external power supply

**Claims**

1. A charge control method for a nonaqueous electrolyte secondary battery, wherein the nonaqueous electrolyte secondary battery includes a positive electrode, a negative electrode, a separator, and a nonaqueous electrolyte, the negative electrode is a negative electrode in which a lithium metal deposits on the negative electrode during charging and the lithium metal dissolves into the nonaqueous electrolyte during discharging, and a spacer for forming a space between the positive electrode and the negative electrode is provided on at least one member selected from the group consisting of the positive electrode, the negative electrode, and the separator, the charge control method comprising:

   a normal charging step of charging the nonaqueous electrolyte secondary battery based on a first charging profile;
   a determination step of determining whether predetermined data regarding the nonaqueous electrolyte secondary battery has reached a predetermined value; and
   a recovery charging step of, when it is determined that the predetermined data has reached the predetermined value, charging the nonaqueous electrolyte secondary battery based on a second charging profile as subsequent charging,
   wherein an average charge current value in the second charging profile is smaller than an average charge current value in the first charging profile.

2. The charge control method according to claim 1, wherein the second charging profile is a profile in which constant current charging is performed at a current density of 1.0 mA/cm$^2$ or less.

3. The charge control method according to claim 1,

wherein the predetermined data is a charge and discharge count of the nonaqueous electrolyte secondary battery,
when the charge and discharge count from an initial state or the charge and discharge count from the recovery charging step performed previously reaches a predetermined value N, the recovery charging step is performed as the subsequent charging, and
the predetermined value N is a value within a range of 49 to 99.

4. The charge control method according to claim 1,

wherein the predetermined data is an accumulated charged electricity amount of the nonaqueous electrolyte secondary battery,
when the accumulated charged electricity amount from an initial state or the accumulated charged electricity amount after the recovery charging step performed previously reaches a predetermined value X, the recovery charging step is performed as the subsequent charging, and
the predetermined value X is a value within a range of 50 to 100 times an initial charge capacity of the nonaqueous electrolyte secondary battery.

5. The charge control method according to claim 1,

wherein the predetermined data is a discharge capacity of the nonaqueous electrolyte secondary battery,
when a reduction rate of the discharge capacity from the discharge capacity in an initial state or a reduction rate of the discharge capacity from the discharge capacity after the recovery charging step performed previously reaches a predetermined value Y, the recovery charging step is performed as the subsequent charging, and
the predetermined value Y is a value within a range of 2 to 5%.

6. The charge control method according to claim 1, wherein the first charging profile is a profile in which constant current charging is performed at a current density of 2.0 mA/cm$^2$ or more.

7. The charge control method according to claim 1, wherein the first charging profile includes: a first charging step, a second charging step, and a third charging step in this order, the first charging step being a step of performing constant current charging at a first current density that is set to 1.0 mA/cm$^2$ or less, the second charging step being a step of performing constant current charging at a second current density that is greater than the first current density and set to 4.0 mA/cm$^2$ or less, and the third charging step being a step of performing constant current charging at a third current density that is greater than the second current density and set to 4.0 mA/cm$^2$ or more.

8. The charge control method according to claim 7,

   wherein an amount of electricity charged in the first charging step is 15% or less of a total amount of electricity charged based on the first charging profile, and
   a total of the amount of electricity charged in the first charging step and an amount of electricity charged in the second charging step is 50% or less of the total amount of electricity charged.

9. A power supply apparatus comprising at least one nonaqueous electrolyte secondary battery,

   wherein the at least one nonaqueous electrolyte secondary battery includes a positive electrode, a negative electrode, a separator, and a nonaqueous electrolyte,
   the negative electrode is a negative electrode in which a lithium metal deposits on the negative electrode during charging and the lithium metal dissolves into the nonaqueous electrolyte during discharging,
   a spacer for forming a space between the positive electrode and the negative electrode is provided on at least one member selected from the group consisting of the positive electrode, the negative electrode, and the separator, and
   charging of the at least one nonaqueous electrolyte secondary battery is controlled based on the charge control method according to claim 1 or 2.

10. A charge control system for a nonaqueous electrolyte secondary battery, wherein the nonaqueous electrolyte secondary battery includes a positive electrode, a negative electrode, a separator, and a nonaqueous electrolyte, the negative electrode is a negative electrode in which a lithium metal deposits on the negative electrode during charging and the lithium metal dissolves into the nonaqueous electrolyte during discharging, and a spacer for forming a space between the positive electrode and the negative electrode is provided on at least one member selected from the group consisting of the positive electrode, the negative electrode, and the separator, the charge control system comprising:

   a charge control unit that charges the nonaqueous electrolyte secondary battery based on predetermined data regarding the nonaqueous electrolyte secondary battery,

wherein the charge control unit executes:

   a normal charging step of charging the nonaqueous electrolyte secondary battery based on a first charging profile;
   a determination step of determining whether the predetermined data regarding the nonaqueous electrolyte secondary battery has reached a predetermined value; and
   a recovery charging step of, when it is determined that the predetermined data has reached the predetermined value, charging the nonaqueous electrolyte secondary battery based on a second charging profile as subsequent charging, and
   an average charge current value in the second charging profile is smaller than an average charge current value in the first charging profile.

11. The charge control system according to claim 10, wherein the second charging profile is a profile in which constant current charging is performed at a current density of 1.0 mA/cm$^2$ or less.

12. The charge control system according to claim 10 or 11,
    wherein the first charging profile is a profile in which constant current charging is performed at a current density of 2.0 mA/cm$^2$ or more.

13. The charge control system according to claim 10 or 11,
    wherein the first charging profile includes a first charging step, a second charging step, and a third charging step in this order, the first charging step being a step of performing constant current charging at a first current density that is set to 1.0 mA/cm$^2$ or less, the second charging step being a step of performing constant current charging at a second current density that is greater than the first current density and set to 4.0 mA/cm$^2$ or less, and the third charging step being a step of performing constant current charging at a third current density that is greater than the second current density and set to 4.0 mA/cm$^2$ or more.

14. A power supply apparatus comprising:

   at least one nonaqueous electrolyte secondary battery; and
   the charge control system according to claim 10 or 11,
   wherein the at least one nonaqueous electrolyte secondary battery includes a positive electrode, a negative electrode, a separator, and a nonaqueous electrolyte,

the negative electrode is a negative electrode in which a lithium metal deposits on the negative electrode during charging and the lithium metal dissolves into the nonaqueous electrolyte during discharging,

a spacer for forming a space between the positive electrode and the negative electrode is provided on at least one member selected from the group consisting of the positive electrode, the negative electrode, and the separator, and charging of the at least one nonaqueous electrolyte secondary battery is controlled by the charge control system.

## FIG. 1

```
                              ┌──────────────────┐
                              │    EXTERNAL       │────── 300
                              │  POWER SUPPLY     │
                              └──────────────────┘
  200                                  │
   ↘                                   ▼
                    ┌─────────────────────────────────┐
                    │       110                        │────── 100
                    │    ┌──────────────────┐          │
                    │    │  CHARGE CONTROL   │          │
                    │    │      UNIT         │          │
                    │    │ (CHARGE CIRCUIT)  │          │
                    │    └──────────────────┘          │
                    └─────────────────────────────────┘
                                   │
                                   ▼
                          ┌──────────────────┐
                          │   SECONDARY       │────── 210
                          │    BATTERY        │
                          └──────────────────┘
```

## FIG. 2

```
                    ┌──────────────┐
                    │    START      │
                    └──────────────┘
                           │                         ◄─────────────┐
                           ▼                                       │
            ┌─────────────────────────────────┐                   │
            │  PERFORM NORMAL CHARGING STEP    │──── S11           │
            │  AND RECORD DATA (D)             │                   │
            └─────────────────────────────────┘                   │
                           │          ◄────────────────┐          │
                           ▼                            │          │
            ┌─────────────────────────────────┐         │          │
            │  SUPPLY POWER TO EXTERNAL DEVICE │──── S12 │          │
            │  (DISCHARGING STEP)             │         │          │
            └─────────────────────────────────┘         │          │
                           │                            │          │
                           ▼                     S13     │          │
                    ◇──────────────────────────◇        │          │
                   ╱  DATA (D) HAS REACHED       ╲   NO  │          │
                   ╲  PREDETERMINED VALUE?       ╱───────┘          │
                    ◇──────────────────────────◇                   │
                           │ YES                                    │
                           ▼                                        │
            ┌─────────────────────────────────┐                    │
            │  PERFORM RECOVERY CHARGING STEP  │──── S14            │
            │  AND RECORD DATA (D)             │                    │
            └─────────────────────────────────┘                    │
                           │                                        │
                           └────────────────────────────────────────┘
```

*FIG. 3*

## FIG. 4

**FIG. 5**

BATTERY A1 (WITH SPACER)

(Capacity retention rate (%) vs. cycle count for Battery A1, comparing WITHOUT RECOVERY CHARGING STEP and WITH RECOVERY CHARGING STEP)

**FIG. 6**

BATTERY C1 (WITHOUT SPACER)

(Capacity retention rate (%) vs. cycle count for Battery C1, comparing WITHOUT RECOVERY CHARGING STEP and WITH RECOVERY CHARGING STEP)

## INTERNATIONAL SEARCH REPORT

| International application No. |
| --- |
| **PCT/JP2023/045744** |

### A. CLASSIFICATION OF SUBJECT MATTER

*H02J 7/02*(2016.01)i; *H01M 10/44*(2006.01)i; *H01M 10/48*(2006.01)i; *H01M 50/463*(2021.01)i
FI:   H02J7/02 E; H01M50/463 B; H01M10/44 A; H01M10/44 P; H01M10/48 P; H01M10/44 Q

According to International Patent Classification (IPC) or to both national classification and IPC

### B. FIELDS SEARCHED

Minimum documentation searched (classification system followed by classification symbols)

H02J7/02; H01M10/44; H01M10/48; H01M50/463

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2022/163539 A1 (PANASONIC INTELLECTUAL PROPERTY MANAGEMENT CO., LTD.) 04 August 2022 (2022-08-04)<br>     paragraphs [0001]-[0131], fig. 1-5 | 1-2, 6-14 |
| A | | 3-5 |
| A | WO 2022/224872 A1 (PANASONIC INTELLECTUAL PROPERTY MANAGEMENT CO., LTD.) 27 October 2022 (2022-10-27)<br>     entire text, all drawings | 1-14 |
| A | WO 2022/209601 A1 (PANASONIC INTELLECTUAL PROPERTY MANAGEMENT CO., LTD.) 06 October 2022 (2022-10-06)<br>     entire text, all drawings | 1-14 |
| A | WO 2020/202845 A1 (PANASONIC INTELLECTUAL PROPERTY MANAGEMENT CO., LTD.) 08 October 2020 (2020-10-08)<br>     entire text, all drawings | 1-14 |

☑ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 March 2024** | **19 March 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2023/045744**

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2021/172175 A1 (PANASONIC INTELLECTUAL PROPERTY MANAGEMENT CO., LTD.) 02 September 2021 (2021-09-02)<br>entire text, all drawings | 1-14 |

Form PCT/ISA/210 (second sheet) (July 2022)

**INTERNATIONAL SEARCH REPORT**
Information on patent family members

International application No.

**PCT/JP2023/045744**

| Patent document<br>cited in search report | | | Publication date<br>(day/month/year) | Patent family member(s) | | | Publication date<br>(day/month/year) |
|---|---|---|---|---|---|---|---|
| WO | 2022/163539 | A1 | 04 August 2022 | EP<br>paragraphs [0001]-[0131], fig.<br>1-5<br>CN | 4287295<br><br><br>116830356 | A1<br><br><br>A | |
| WO | 2022/224872 | A1 | 27 October 2022 | CN | 117121262 | A | |
| WO | 2022/209601 | A1 | 06 October 2022 | CN | 117099240 | A | |
| WO | 2020/202845 | A1 | 08 October 2020 | US<br>entire text, all drawings<br>CN | 2022/0181695<br><br>113614967 | A1<br><br>A | |
| WO | 2021/172175 | A1 | 02 September 2021 | US<br>entire text, all drawings<br>EP<br>CN | 2023/0361367<br><br>4113665<br>115152076 | A1<br><br>A1<br>A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012124211 A